# EUROPEAN PATENT SPECIFICATION

(11) **EP 4 395 292 B1**
(45) Date of publication and mention of the grant of the patent: **11.11.2026**
(21) Application number: 23213188.8
(22) Date of filing: 30.11.2023
(51) Int. Cl.: H04M 3/42

(54) **CALL METHOD AND CALL SYSTEM**
ANRUFVERFAHREN UND ANRUFSYSTEM
PROCÉDÉ D'APPEL ET SYSTÈME D'APPEL

(30) Priority: 27.12.2022 CN 202211679522
(43) Date of publication of application: 03.07.2024
(73) Proprietor: Nio Technology (Anhui) Co., Ltd, Hefei City, Anhui 230601 (CN)
(72) Inventor: HONG, Shiyun, Hefei City, Anhui 230601 (CN); MAO, Wei, Hefei City, Anhui 230601 (CN); FU, Qiang, Hefei City, Anhui 230601 (CN); WU, Han, Hefei City, Anhui 230601 (CN); ZHAO, Lang, Hefei City, Anhui 230601 (CN); WU, Yicheng, Hefei City, Anhui 230601 (CN); CAO, Youqiang, Hefei City, Anhui 230601 (CN); LIANG, Fang, Hefei City, Anhui 230601 (CN)
(74) Representative: Vossius & Partner Patentanwälte Rechtsanwälte mbB

(56) References cited:
- NILANJAN BANERJEE ET AL: "Telecom mashups", UBIQUITOUS INFORMATION MANAGEMENT AND COMMUNICATION, ACM, 2 PENN PLAZA, SUITE 701 NEW YORK NY 10121-0701 USA, 31 January 2008 (2008-01-31), pages 146 - 150, XP058202278, ISBN: 978-1-59593-993-7, DOI: 10.1145/1352793.1352824
- ANONYMOUS: "RFC 7329 - A Session Identifier for the Session Initiation Protocol (SIP)", 1 August 2014 (2014-08-01), XP093160746, Retrieved from the Internet <URL:https://datatracker.ietf.org/doc/html/rfc7329#page-5> [retrieved on 20240508]
- P. JONES G. SALGUEIRO C. PEARCE P. GIRALT CISCO SYSTEMS ET AL: "End-to-End Session Identification in IP-Based Multimedia Communication Networks; rfc7989.txt", END-TO-END SESSION IDENTIFICATION IN IP-BASED MULTIMEDIA COMMUNICATION NETWORKS; RFC7989.TXT INTERNET ENGINEERING TASK FORCE, IETF; STANDARD, INTERNET SOCIETY (ISOC) 4, RUE DES FALAISES CH- 1205 GENEVA, SWITZERLAND, 20 October 2016 (2016-10-20), pages 1 - 45, XP015115633, [retrieved on 20161020]

## Description

### Technical Field

The disclosure relates to the field of communication, and more specifically, to a call method, a call system, and a computer storage medium.

### Background Art

Some organizations providing vehicle services usually need calls with vehicle users through manual intervention, to solve problems such as user consultations, some faults that can be remotely handled, and abnormal orders, for example, a background service center of a battery swap station, a background service center of a charging station, or an automobile sales and maintenance service center. In addition, the vehicle users also have requirements for calls with the organizations providing the vehicle services.
Currently, the organizations providing the vehicle services usually need to dial phone numbers to contact the vehicle users. However, the organizations providing the vehicle services may not have the phone numbers of the users or it is difficult to contact the users through the phone numbers. As a result, helps cannot be provided for the users, and user experience is affected. In addition, if the users contact, in driving processes with mobile phones, the organizations providing the vehicle services, driving safety may also be affected.

Telecom Mashups: Enabling Web 2.0 for Telecom Services relates to an emerging Web 2.0 marketplace that presents an important opportunity for Telecom operators to sell their own capabilities and content as services. Operators have a wealth of content associated with their network as well as core network enablers, e.g. call control, presence and messaging, which could serve as potential new revenue streams in a Web 2.0 world. Moreover, with the looming threat from Internet companies, there is an increasing need for operators to make both core and value-added functions reusable and mashable. In this paper, we highlight the design principles of a Telecom Mashup architecture and describe a prototype application built using this architecture.

### Summary

The subject-matter of the present invention is defined in independent claim 1 and 7. Further preferred embodiments of the present invention are defined in the dependent claims. In particular, in order to solve or at least alleviate one or more of the above problems, the following technical solutions are provided.

According to a first aspect of the disclosure, there is provided a call method. The method includes: creating, through a telephone network terminal in response to receiving a request for a session with a vehicle-mounted terminal from a remote service terminal, a session space and an identifier associated with the session space; creating the session based on the identifier associated with the session space; and instructing, in response to creation of the session, the remote service terminal and the vehicle-mounted terminal to start the session, so as to cause the remote service terminal and the vehicle-mounted terminal to join the session space for the session.

In the call method according to an embodiment of the disclosure, the creating, through a telephone network terminal, a session space and an identifier associated with the session space includes: sending a request for creating the session space to the telephone network terminal; and receiving the identifier associated with the session space from the telephone network terminal in response to creation of the session space through the telephone network terminal.

In the call method according to an embodiment or any one of the above embodiments of the disclosure, the session is associated with an identifier of the remote service terminal, an identifier of the vehicle-mounted terminal, and the identifier associated with the session space.

In the call method according to an embodiment or any one of the above embodiments of the disclosure, causing the remote service terminal and the vehicle-mounted terminal to join the session space for the session includes: causing the remote service terminal to join the session space through a telephone network; and causing the vehicle-mounted terminal to join the session space through a real-time communication network.

In the call method according to an embodiment or any one of the above embodiments of the disclosure, the method further includes: instructing, in response to receiving a request for ending the session from the vehicle-mounted terminal, the remote service terminal to end the session; ending the session in response to receiving an answering message for ending the session from the remote service terminal; and invoking the remote service terminal and the vehicle-mounted terminal to quit the session space.

In the call method according to an embodiment or any one of the above embodiments of the disclosure, the method further includes: instructing, in response to receiving a request for ending the session from the remote service terminal, the vehicle-mounted terminal to end the session; ending the session in response to receiving an answering message for ending the session from the vehicle-mounted terminal; and invoking the remote service terminal and the vehicle-mounted terminal to quit the session space.

According to a second aspect of the disclosure, there is provided a call system. The system includes: a memory; a processor coupled to the memory; and a computer program stored on the memory and running on the processor. The computer program runs to perform the steps of the call method according to the first aspect of the disclosure.

In the call solutions according to one or more embodiments of the disclosure, a direct call channel can be established between the remote service terminal and the vehicle-mounted terminal, so that the remote service terminal can perform a call with the vehicle-mounted terminal through the channel without dialing a phone number of a vehicle user, which avoids a case that helps cannot be provided for the user because there is no phone number of the user or it is difficult to contact the user through the phone number. Therefore, a service is provided for the user efficiently and conveniently.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the drawings:
FIG. 1 is a flowchart of a call method according to one or more embodiments of the disclosure;
FIG. 2 is a flowchart of a call method according to one or more embodiments of the disclosure;
FIG. 3 is a flowchart of a call method according to one or more embodiments of the disclosure;
FIG. 4 is a flowchart of a call method according to one or more embodiments of the disclosure; and
FIG. 5 is a block diagram of a call system according to one or more embodiments of the disclosure.

According to a fifth aspect of the disclosure, there is provided a computer storage medium, which includes instructions. When the instructions are run, the steps of the call method according to the first aspect of the disclosure are performed.

According to a sixth aspect of the disclosure, there is provided a computer storage medium, which includes instructions. When the instructions are run, the steps of the call method according to the second aspect of the disclosure are performed.

In the call solutions according to one or more embodiments of the disclosure, a direct call channel can be established between the remote service terminal and the vehicle-mounted terminal, so that the remote service terminal can perform a call with the vehicle-mounted terminal through the channel without dialing a phone number of a vehicle user, which avoids a case that helps cannot be provided for the user because there is no phone number of the user or it is difficult to contact the user through the phone number. Therefore, a service is provided for the user efficiently and conveniently.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the drawings:

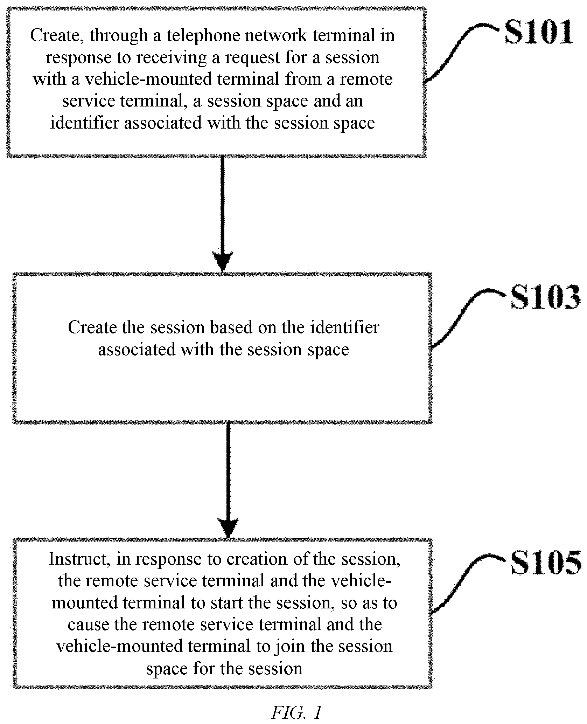

FIG. 1 is a flowchart of a call method according to one or more embodiments of the disclosure;

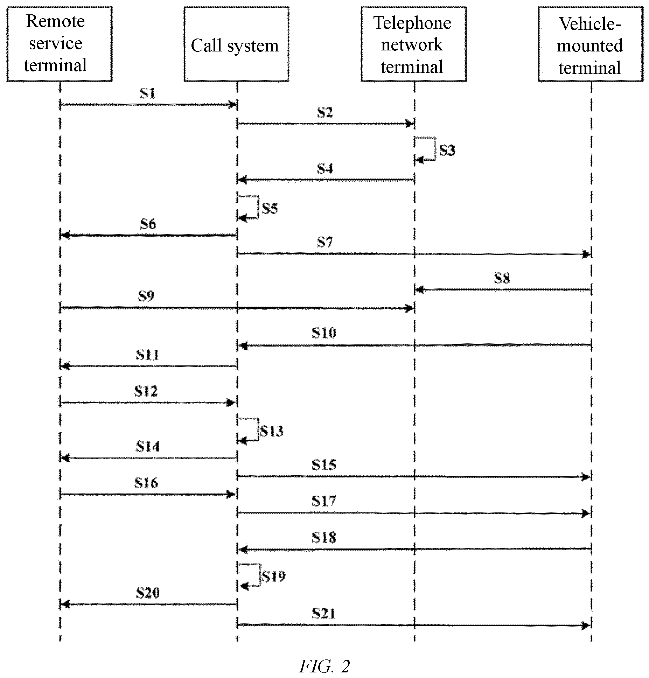

FIG. 2 is a flowchart of a call method according to one or more embodiments of the disclosure;

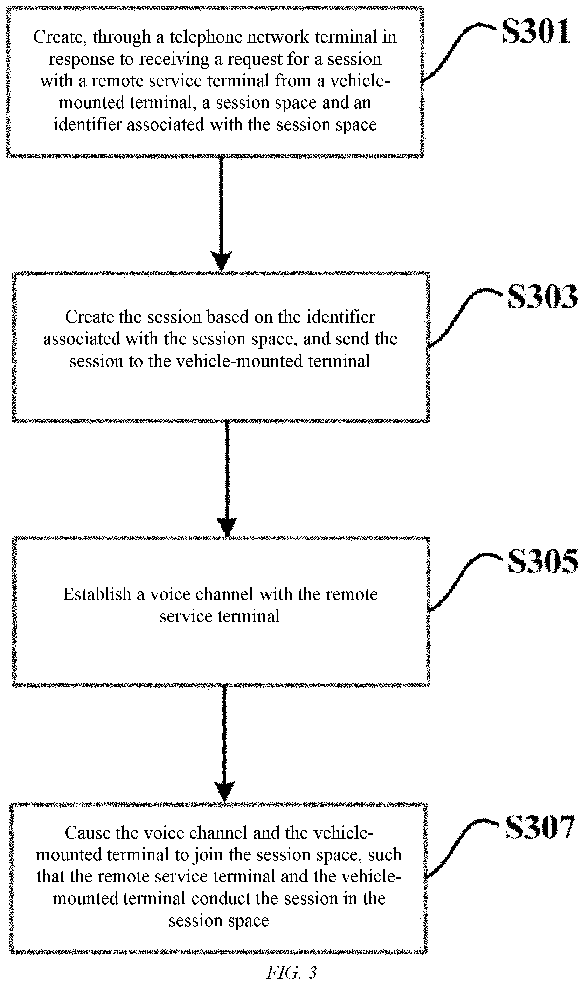

FIG. 3 is a flowchart of a call method according to one or more embodiments of the disclosure;

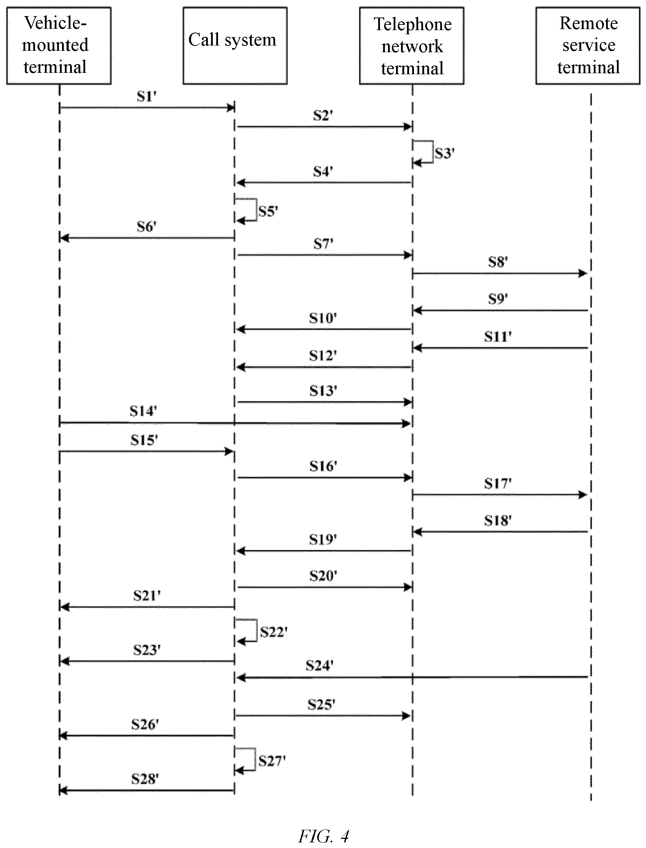

FIG. 4 is a flowchart of a call method according to one or more embodiments of the disclosure; and

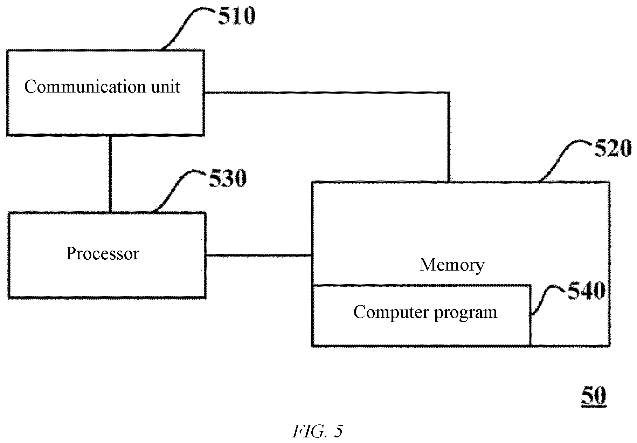

FIG. 5 is a block diagram of a call system according to one or more embodiments of the disclosure.

### Detailed Description of Embodiments

The disclosure is described below more comprehensively with reference to the accompanying drawings in which schematic embodiments of the disclosure are shown. However, the disclosure may be implemented in different forms, and should not be construed as being limited to the embodiments provided herein. The embodiments provided above are intended to make the disclosure of this specification comprehensive and complete, to more comprehensively convey the scope of protection of the disclosure to those skilled in the art.

In this specification, the terms such as "include" and "comprise" indicate that in addition to the units and steps that are directly and explicitly described in the specification and claims, other units and steps that are not directly or explicitly described are not excluded in the technical solutions of the disclosure.

Unless otherwise specified, the terms such as "first" and "second" are not used to indicate sequences of units in terms of time, space, size, etc., and are only used to distinguish between the units.

In this specification, a remote service terminal may be understood as various organizations capable of providing vehicle services. The services may include but are not limited to a battery swap service, a charging service, a maintenance service, and an after-sales service.

Various exemplary embodiments according to the disclosure will be described below in detail with reference to the accompanying drawings.

FIG. 1 is a flowchart of a call method according to one or more embodiments of the disclosure.

As shown in FIG. 1, in step S101, a telephone network terminal creates, in response to receiving a request for a session with a vehicle-mounted terminal from a remote service terminal, a session space and an identifier associated with the session space.

Optionally, in step S101, when the request for the session with the vehicle-mounted terminal is received from the remote service terminal, an http request for creating the session space may be initiated to the telephone network terminal. After receiving the http request for creating the session space, the telephone network terminal may create the session space and the identifier associated with the session space, and return the identifier associated with the session space. Exemplarily, the telephone network terminal may be implemented as a public switched telephone network (PSTN) service provider. Exemplarily, the remote service terminal may be implemented as a backend duty center of a battery swap station, and provides a remote service for a site on which there is no battery swap duty service.

In step S103, the session is created based on the identifier associated with the session space.

Optionally, the vehicle-mounted terminal and the remote service terminal may preset specific identifiers to represent respective identities. Optionally, the created session may be bound to an identifier of the remote service terminal, an identifier of the vehicle-mounted terminal, and the identifier associated with the session space.

In step S105, the remote service terminal and the vehicle-mounted terminal are instructed, in response to creation of the session, to start the session, so as to cause the remote service terminal and the vehicle-mounted terminal to join the session space for the session.

Optionally, in step S105, the remote service terminal may join the session space through a PSTN, and the vehicle-mounted terminal may join the session space through a real-time communication (RTC) network.

Optionally, the above call method may further include that: the remote service terminal is instructed, when receiving a request for ending the session from the vehicle-mounted terminal, to end the session, the session is ended when receiving an answering message for ending the session from the remote service terminal, and the remote service terminal and the vehicle-mounted terminal are invoked to quit the session space.

Optionally, the above call method may further include that: the vehicle-mounted terminal is instructed, when receiving a request for ending the session from the remote service terminal, to end the session, the session is ended when receiving an answering message for ending the session from the vehicle-mounted terminal, and the remote service terminal and the vehicle-mounted terminal are invoked to quit the session space.

In the call method proposed according to an aspect of the disclosure, a direct call channel can be established between the remote service terminal and the vehicle-mounted terminal, so that the remote service terminal can perform a call with the vehicle-mounted terminal through the channel without dialing a phone number of a vehicle user. For example, the remote service terminal can directly call a console screen of a vehicle with one touch to contact the vehicle user without dialing the phone number of the user. In this way, a case that helps cannot be provided for the user because there is no phone number of the user or it is difficult to contact the user through the phone number is avoided. Therefore, a service is provided for the user efficiently and conveniently. In addition, in the call method proposed according to an aspect of the disclosure, a general method for real-time two-way communication between the remote service terminal and the vehicle-mounted terminal can be provided, a pluggable underlying communication architecture is adaptively supported, and a heterogeneous communication architecture may further be supported.

FIG. 2 is a flowchart of a call method according to one or more embodiments of the disclosure.

As shown in FIG. 2, steps S1 to S9 show a process in which a remote service terminal calls a vehicle-mounted terminal.

In step S1, the remote service terminal sends a request for a session with the vehicle-mounted terminal to a call system according to one or more embodiments of the disclosure.

In step S2, after receiving the request for the session with the vehicle-mounted terminal from the remote service terminal, the call system according to one or more embodiments of the disclosure sends an http request for creating a session space to a telephone network terminal.

In step S3, after receiving the http request for creating the session space, the telephone network terminal creates the session space and an identifier associated with the session space.

In step S4, the telephone network terminal returns the created identifier associated with the session space to the call system according to one or more embodiments of the disclosure.

In step S5, the call system according to one or more embodiments of the disclosure creates the session based on the identifier associated with the session space. Optionally, the created session is bound to an identifier of the remote service terminal, an identifier of the vehicle-mounted terminal, and the identifier associated with the session space.

In step S6, the call system according to one or more embodiments of the disclosure returns the created session to the remote service terminal.

In step S7, the call system according to one or more embodiments of the disclosure instructs the vehicle-mounted terminal to start the session. Exemplarily, the call system according to one or more embodiments of the disclosure may instruct the vehicle-mounted terminal, through an Internet of vehicles, to start the session.

In step S8, after receiving the indication of starting the session, the vehicle-mounted terminal joins the session space through RTC.

In step S9, after receiving the created session, the remote service terminal joins the session space through a PSTN.

As shown in FIG. 2, steps S10 to S15 show a process in which the vehicle-mounted terminal ends the session.

In step S10, the vehicle-mounted terminal sends a request for ending the current session to the call system according to one or more embodiments of the disclosure.

In step S11, after receiving the request for ending the current session, the call system according to one or more embodiments of the disclosure instructs the remote service terminal to end the current session.

In step S12, the remote service terminal sends an answering message for ending the current session to the call system according to one or more embodiments of the disclosure.

In step S13, after receiving the answering message for ending the current session, the call system according to one or more embodiments of the disclosure ends the current session.

In step S14, the remote service terminal is invoked to quit the session space.

In step S 15, the vehicle-mounted terminal is invoked to quit the session space.

As shown in FIG. 2, steps S16 to S21 show a process in which the remote service terminal ends the session.

In step S16, the remote service terminal sends a request for ending the current session to the call system according to one or more embodiments of the disclosure.

In step S17, after receiving the request for ending the current session, the call system according to one or more embodiments of the disclosure instructs the vehicle-mounted terminal to end the current session. Exemplarily, the call system according to one or more embodiments of the disclosure may instruct the vehicle-mounted terminal, through an Internet of vehicles, to end the current session.

In step S18, the vehicle-mounted terminal sends an answering message for ending the current session to the call system according to one or more embodiments of the disclosure.

In step S19, after receiving the answering message for ending the current session, the call system according to one or more embodiments of the disclosure ends the current session.

In step S20, the remote service terminal is invoked to quit the session space.

In step S21, the vehicle-mounted terminal is invoked to quit the session space.

It should be noted that a sequence of the steps of the call method according to one or more embodiments of the disclosure described in combination with FIG. 2 is merely exemplary, and the sequence of the steps of the method may be changed without departing from the spirit and the scope of the disclosure. For example, step S7 may be performed before step S6, step S9 may be performed before step S8, step S15 may be performed before step S14, and step S21 may be performed before step S20.

FIG. 3 is a flowchart of a call method according to one or more embodiments of the disclosure.

As shown in FIG. 3, in step S301, a telephone network terminal creates, in response to receiving a request for a session with a remote service terminal from a vehicle-mounted terminal, a session space and an identifier associated with the session space.

Optionally, in step S301, when the request for the session with the remote service terminal is received from the vehicle-mounted terminal, an http request for creating the session space may be initiated to the telephone network terminal. After receiving the http request for creating the session space, the telephone network terminal may create the session space and the identifier associated with the session space, and return the identifier associated with the session space. Exemplarily, the telephone network terminal may be implemented as a PSTN service provider.

Optionally, the vehicle-mounted terminal may be integrated with an RTC client, and may preset a specific identifier to represent an identity of the vehicle-mounted terminal. Optionally, the vehicle-mounted terminal may obtain a contact number of the remote service terminal from a service backend, and call the remote service terminal by using the RTC client.

In step S303, the session is created based on the identifier associated with the session space, and the created session is sent to the vehicle-mounted terminal.

Optionally, the created session may be bound to the contact number of the remote service terminal, an identifier of the vehicle-mounted terminal, and the identifier associated with the session space.

In step S305, a voice channel with the remote service terminal is established.

Optionally, in step S305, the telephone network terminal may send a call request to the remote service terminal, and establish the voice channel with the remote service terminal in response to the remote service terminal answering the call request.

Optionally, in step S305, an http request may be sent to the telephone network terminal to call the contact number of the remote service terminal. After receiving the http request, the telephone network terminal sends the call request to the remote service terminal through an operator. After receiving the call request, the remote service terminal returns an event indicating ringing and an event indicating answering to the telephone network terminal. After receiving the event indicating ringing, the telephone network terminal generates and returns an identifier of the remote service terminal. After receiving the event indicating answering, the telephone network terminal generates and returns an indication of starting calling.

In step S307, the voice channel and the vehicle-mounted terminal are caused to join the session space, such that the remote service terminal and the vehicle-mounted terminal conduct the session in the session space.

Optionally, in step S307, the voice channel may join the session space through a PSTN, and the vehicle-mounted terminal may join the session space through RTC.

The PSTN and RTC are combined to perform a call, so that the remote service terminal can manage a busy/idle state of service personnel to ensure efficient and balanced call distribution. Therefore, a service is provided for a user efficiently and conveniently.

Optionally, the above call method may further include that: the remote service terminal is requested, when receiving a request for ending the session from the vehicle-mounted terminal, to end the session, the voice channel is invoked to quit the session space when receiving an answering message for ending the session from the remote service terminal, the vehicle-mounted terminal is instructed to end the session, and the vehicle-mounted terminal is invoked to quit the session space.

Optionally, the above call method may further include that: the voice channel is invoked to quit the session space when receiving a request for ending the session from the remote service terminal, the vehicle-mounted terminal is instructed to end the session, and the vehicle-mounted terminal is invoked to quit the session space.

In the call method proposed according to an aspect of the disclosure, a direct call channel can be established between the vehicle-mounted terminal and the remote service terminal, so that the vehicle-mounted terminal can perform a call with the remote service terminal through the channel by using a console screen of a vehicle without connecting a mobile phone through Bluetooth or dialing with a mobile phone in the vehicle. In addition, in the call method proposed according to an aspect of the disclosure, a general method for real-time two-way communication between the remote service terminal and the vehicle-mounted terminal can be provided, a pluggable underlying communication architecture is adaptively supported, and a heterogeneous communication architecture may further be supported.

FIG. 4 is a flowchart of a call method according to one or more embodiments of the disclosure.

As shown in FIG. 4, steps S1' to S14' show a process in which a vehicle-mounted terminal calls a remote service terminal.

In step S1', the vehicle-mounted terminal sends a request for a session with the remote service terminal to a call system according to one or more embodiments of the disclosure. Optionally, the vehicle-mounted terminal may obtain a contact number of the remote service terminal from a service backend, and call the remote service terminal by using the RTC client.

In step S2', after receiving the request for the session with the remote service terminal from the vehicle-mounted terminal, the call system according to one or more embodiments of the disclosure sends an http request for creating a session space to a telephone network terminal.

In step S3', after receiving the http request for creating the session space, the telephone network terminal creates the session space and an identifier associated with the session space.

In step S4', the telephone network terminal returns the created identifier associated with the session space to the call system according to one or more embodiments of the disclosure.

In step S5', the call system according to one or more embodiments of the disclosure creates the session based on the identifier associated with the session space. Optionally, the created session is bound to the contact number of the remote service terminal, an identifier of the vehicle-mounted terminal, and the identifier associated with the session space.

In step S6', the call system according to one or more embodiments of the disclosure returns the created session to the vehicle-mounted terminal.

In step S7', the call system according to one or more embodiments of the disclosure initiates an http request to the telephone network terminal to call the contact number of the remote service terminal.

In step S8', after receiving the http request, the telephone network terminal sends a call request to the remote service terminal.

In step S9', after receiving the call request, the remote service terminal returns an event indicating ringing to the telephone network terminal through an operator.

In step S10', after receiving the event indicating ringing, the telephone network terminal generates an identifier of the remote service terminal, and returns the identifier to the call system according to one or more embodiments of the disclosure.

In step S11', after receiving the call request, the remote service terminal returns an event indicating answering to the telephone network terminal through the operator.

In step S 12', after receiving the event indicating answering, the telephone network terminal generates an indication of starting calling, and returns the indication to the call system according to one or more embodiments of the disclosure. In this way, a voice channel with the remote service terminal is established.

In step S13', the voice channel with the remote service terminal is caused to join the session space through a PSTN.

In step S14', the vehicle-mounted terminal is caused to join the session space through RTC.

As shown in FIG. 4, steps S15' to S23' show a process in which the vehicle-mounted terminal ends the session.

In step S15', the vehicle-mounted terminal sends a request for ending the current session to the call system according to one or more embodiments of the disclosure.

In step S16', after receiving the request for ending the current session, the call system according to one or more embodiments of the disclosure initiates an http request to the telephone network terminal to request for ending the current session.

In step S17', after receiving the http request, the telephone network terminal sends the request for ending the current session to the remote service terminal.

In step S18', after receiving the request for ending the current session, the remote service terminal sends an answering message for ending the current session to the telephone network terminal.

In step S19', the telephone network terminal sends an indication of ending the current session to the call system according to one or more embodiments of the disclosure.

In step S20', the voice channel is invoked to quit the session space.

In step S21', the call system according to one or more embodiments of the disclosure instructs the vehicle-mounted terminal to end the current session. Exemplarily, the call system according to one or more embodiments of the disclosure may instruct the vehicle-mounted terminal, through an Internet of vehicles, to end the current session.

In step S22', the current session is ended.

In step S23', the vehicle-mounted terminal is invoked to quit the session space.

As shown in FIG. 4, steps S24' to S28' show a process in which the remote service terminal ends the session.

In step S24', the remote service terminal sends a request for ending the current session to the call system according to one or more embodiments of the disclosure.

In step S25', the voice channel is invoked to quit the session space.

In step S26', the call system according to one or more embodiments of the disclosure instructs the vehicle-mounted terminal to end the current session. Exemplarily, the call system according to one or more embodiments of the disclosure may instruct the vehicle-mounted terminal, through an Internet of vehicles, to end the current session.

In step S27', the current session is ended.

In step S28', the vehicle-mounted terminal is invoked to quit the session space.

It should be noted that a sequence of the steps of the call method according to one or more embodiments of the disclosure described in combination with FIG. 4 is merely exemplary, and the sequence of the steps of the method may be changed without departing from the spirit and the scope of the disclosure. For example, step S14' may be performed before step S13'.

FIG. 5 is a block diagram of a call system according to one or more embodiments of the disclosure.

As shown in FIG. 5, the call system 50 includes a communication unit 510, a memory 520 (for example, a non-volatile memory such as a flash memory, a ROM, a hard disk drive, a magnetic disk, or an optical disc), a processor 530, and a computer program 540 stored on the memory 320 and capable of running on the processor 530.

The communication unit 510, as a communication interface, is configured to establish a communication connection between the call system 50 and an external device or network (for example, a remote service terminal, a telephone network terminal, or a vehicle-mounted terminal).

The memory 520 stores the computer program 540 executable by the processor 530. In addition, the memory 520 may further store data generated when the processor 530 executes the computer program and data or commands received from the outside through the communication unit 510.

The processor 530 is configured to execute the computer program 540 to implement a call method according to one or more embodiments of the disclosure.

In addition, as described above, the disclosure may also be implemented as a computer-readable storage medium, including instructions. When the instructions are run, a call method according to one or more embodiments of the disclosure is performed.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components can be implemented as hardware components, and vice versa.

Software (such as program code and/or data) in the disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms. The scope of protection is defined by the appended claims.

## Claims

1. A call method, comprising the following steps:
creating, through a telephone network terminal in response to receiving a request for a session with a vehicle-mounted terminal from a remote service terminal, a session space and an identifier associated with the session space (S101);
creating the session based on the identifier associated with the session space (S103); and
instructing, in response to creation of the session, the remote service terminal and the vehicle-mounted terminal to start the session, so as to cause the remote service terminal and the vehicle-mounted terminal to join the session space for the session (S105).

2. The method according to claim 1, wherein the creating, through a telephone network terminal, a session space and an identifier associated with the session space (S101) comprises:
sending a request for creating the session space to the telephone network terminal; and
receiving the identifier associated with the session space from the telephone network terminal in response to creation of the session space through the telephone network terminal.

3. The method according to claim 1 or 2, wherein the session is associated with an identifier of the remote service terminal, an identifier of the vehicle-mounted terminal, and the identifier associated with the session space.

4. The method according to any one of claims 1 to 3, wherein causing the remote service terminal and the vehicle-mounted terminal to join the session space for the session (S105) comprises:
causing the remote service terminal to join the session space through a telephone network; and
causing the vehicle-mounted terminal to join the session space through a real-time communication network.

5. The method according to any one of claims 1 to 4, further comprising:
instructing, in response to receiving a request for ending the session from the vehicle-mounted terminal, the remote service terminal to end the session;
ending the session in response to receiving an answering message for ending the session from the remote service terminal; and
invoking the remote service terminal and the vehicle-mounted terminal to quit the session space.

6. The method according to any one of claims 1 to 5, further comprising:
instructing, in response to receiving a request for ending the session from the remote service terminal, the vehicle-mounted terminal to end the session;
ending the session in response to receiving an answering message for ending the session from the vehicle-mounted terminal; and
invoking the remote service terminal and the vehicle-mounted terminal to quit the session space.

7. A call system, comprising:
a memory;
a processor coupled to the memory; and
a computer program stored on the memory and running on the processor, wherein the computer program runs to perform a call method according to any one of claims 1 to 6.

## Patentansprüche

1. Anrufverfahren, das die folgenden Schritte umfasst:
Erstellen eines Sitzungsraums und einer Kennung, die mit dem Sitzungsraum assoziiert ist, durch ein Telefonnetzwerk-Endgerät in Reaktion auf das Empfangen einer Anforderung für eine Sitzung mit einem fahrzeugmontierten Endgerät von einem Ferndienst-Endgerät (S101);
Erstellen der Sitzung basierend auf der mit dem Sitzungsraum assoziierten Kennung (S103); und
Anweisen des Ferndienst-Endgeräts und des fahrzeugmontierten Endgeräts in Reaktion auf die Erstellung der Sitzung, die Sitzung zu starten, um das Ferndienst-Endgerät und das fahrzeugmontierte Endgerät zu veranlassen, dem Sitzungsraum für die Sitzung beizutreten (S105).

2. Verfahren nach Anspruch 1, wobei das Erstellen eines Sitzungsraums und einer mit dem Sitzungsraum assoziierten Kennung (S101) über ein Telefonnetzwerk-Endgerät Folgendes umfasst:
Senden einer Anforderung zum Erstellen des Sitzungsraums an das Telefonnetzwerk-Endgerät; und
Empfangen der mit dem Sitzungsraum assoziierten Kennung von dem Telefonnetzwerk-Endgerät in Reaktion auf die Erstellung des Sitzungsraums durch das Telefonnetzwerk-Endgerät.

3. Verfahren nach Anspruch 1 oder 2, wobei die Sitzung mit einer Kennung des Ferndienst-Endgeräts, einer Kennung des fahrzeugmontierten Endgeräts und der mit dem Sitzungsraum assoziierten Kennung assoziiert ist.

4. Verfahren nach einem der Ansprüche 1 bis 3, wobei das Veranlassen des Ferndienst-Endgeräts und des fahrzeugmontierte Endgeräts, dem Sitzungsraum für die Sitzung beizutreten (S105), Folgendes umfasst:
Veranlassen des Ferndienst-Endgeräts, dem Sitzungsraum über ein Telefonnetzwerk beizutreten; und
Veranlassen des fahrzeugmontierten Endgeräts, dem Sitzungsraum über ein Echtzeit-Kommunikationsnetzwerk beizutreten.

5. Verfahren nach einem der Ansprüche 1 bis 4, ferner umfassend:
Anweisen des Ferndienst-Endgeräts, die Sitzung zu beenden, in Reaktion auf das Empfangen einer Anforderung zum Beenden der Sitzung von dem fahrzeugmontierten Endgerät;
Beenden der Sitzung in Reaktion auf das Empfangen einer Antwortnachricht zum Beenden der Sitzung von dem Ferndienst-Endgerät; und
Aufrufen des Ferndienst-Endgeräts und des fahrzeugmontierten Endgeräts, den Sitzungsraum zu verlassen.

6. Verfahren nach einem der Ansprüche 1 bis 5, ferner umfassend:
Anweisen des fahrzeugmontierten Endgeräts, die Sitzung zu beenden, in Reaktion auf das Empfangen einer Anforderung zum Beenden der Sitzung von dem Ferndienst-Endgerät;
Beenden der Sitzung in Reaktion auf das Empfangen einer Antwortnachricht zum Beenden der Sitzung von dem fahrzeugmontierten Endgerät; und
Aufrufen des Ferndienst-Endgeräts und des fahrzeugmontierten Endgeräts, den Sitzungsraum zu verlassen.

7. Anrufsystem, umfassend:
einen Speicher;
einen Prozessor, der mit dem Speicher gekoppelt ist; und
ein Computerprogramm, das in dem Speicher gespeichert ist und auf dem Prozessor ausgeführt wird, wobei das Computerprogramm ausgeführt wird, um ein Anrufverfahren nach einem der Ansprüche 1 bis 6 durchzuführen.

## Revendications

1. Procédé d'appel, comprenant les étapes suivantes :
la création, par l'intermédiaire d'un terminal de réseau téléphonique en réponse à la réception d'une demande de session avec un terminal monté sur véhicule en provenance d'un terminal de service distant, d'un espace de session et d'un identifiant associé à l'espace de session (S101) ;
la création de la session sur la base de l'identifiant associé à l'espace de session (S103) ; et
en réponse à la création de la session, l'instruction donnée au terminal de service distant et au terminal monté sur véhicule de démarrer la session, de manière à amener le terminal de service distant et le terminal monté sur véhicule à rejoindre l'espace de session pour la session (S105).

2. Procédé selon la revendication 1, dans lequel la création, par l'intermédiaire d'un terminal de réseau téléphonique, d'un espace de session et d'un identifiant associé à l'espace de session (S101) comprend :
l'émission d'une demande de création de l'espace de session à destination du terminal de réseau téléphonique ; et
la réception de l'identifiant associé à l'espace de session en provenance du terminal de réseau téléphonique en réponse à la création de l'espace de session par le terminal de réseau téléphonique.

3. Procédé selon la revendication 1 ou 2, dans lequel la session est associée à un identifiant du terminal de service distant, à un identifiant du terminal monté sur véhicule, et à l'identifiant associé à l'espace de session.

4. Procédé selon l'une quelconque des revendications 1 à 3, dans lequel le fait d'amener le terminal de service distant et le terminal monté sur véhicule à rejoindre l'espace de session pour la session (S105) comprend :
le fait d'amener le terminal de service distant à rejoindre l'espace de session par l'intermédiaire d'un réseau téléphonique ; et
le fait d'amener le terminal monté sur véhicule à rejoindre l'espace de session par l'intermédiaire d'un réseau de communication en temps réel.

5. Procédé selon l'une quelconque des revendications 1 à 4, comprenant en outre :
en réponse à la réception d'une demande de fin de session du terminal monté sur véhicule, l'instruction donnée au terminal de service distant de mettre fin à la session ;
la fin de la session en réponse à la réception d'un message de réponse pour mettre fin à la session du terminal de service distant ; et
l'appel du terminal de service distant et du terminal monté sur véhicule à quitter l'espace de session.

6. Procédé selon l'une quelconque des revendications 1 à 5, comprenant en outre :
en réponse à la réception d'une demande de fin de session en provenance du terminal de service distant,
l'instruction donnée au terminal monté sur véhicule de mettre fin à la session ;
la fin de la session en réponse à la réception d'un message de réponse pour mettre fin à la session du terminal monté sur véhicule ; et
l'appel du terminal de service distant et du terminal monté sur véhicule à quitter l'espace de session.

7. Système d'appel, comprenant :
une mémoire ;
un processeur couplé à la mémoire ; et
un programme informatique stocké dans la mémoire et exécuté sur le processeur, dans lequel le programme informatique s'exécute pour exécuter un procédé d'appel selon l'une quelconque des revendications 1 à 6.
